(19) Europäisches Patentamt
European Patent Office
Office européen des brevets

(11) Veröffentlichungsnummer: **0 023 312**
B1

# (12) EUROPÄISCHE PATENTSCHRIFT

(45) Veröffentlichungstag der Patentschrift: **12.01.83**

(51) Int. Cl.³: **C 03 C 3/10,** C 03 C 3/30

(21) Anmeldenummer: **80104133.6**

(22) Anmeldetag: **16.07.80**

## (54) Rissunanfällige, wärmeabsorbierende Verschmelzgläser mit niedrigen Verarbeitungstemperaturen zur hermetischen Kapselung elektronischer Bauteile.

(30) Priorität: **30.07.79 DE 2930912**

(43) Veröffentlichungstag der Anmeldung: **04.02.81 Patentblatt 81/5**

(45) Bekanntmachung des Hinweises auf die Patenterteilung: **12.01.83 Patentblatt 83/2**

(84) Benannte Vertragsstaaten: **BE FR GB NL**

(56) Entgegenhaltungen:
**DE-A-2 358 648**
**US-A-3 445 256**
**US-A-4 001 741**

(73) Patentinhaber: **Schott Glaswerke, Hattenbergstrasse 10, D-6500 Mainz (DE)**

(72) Erfinder: **Sack, Werner, An der Feilkirsch 15, D-6500 Mainz 23 (DE)**
Erfinder: **Lindig, Otto, An der Feilkirsch 11, D-6500 Mainz 23 (DE)**

(74) Vertreter: **Rasper, Joachim, Dr., Bierstadter Höhe 22, D-6200 Wiesbaden (DE)**

EP 0 023 312 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Rissunanfällige, wärmeabsorbierende Verschmelzgläser mit niedrigen Verarbeitungstemperaturen zur hermetischen Kapselung elektronischer Bauteile

Die Erfindung betrifft neue wärmeabsorbierende Verschmelzgläser zur Kapselung von elektronischen Bauteilen.

Gläser mit spezieller IR-Absorption infolge Dotierung mit FeO, die sich durch reine Strahlungsbeheizung mit Quarz-Jod-Lampen heissverarbeiten lassen, werden bevorzugt zur hermetischen Kapselung magnetisch betätigter Kontakte (Reedschalter) verwendet und gehören seit über einem Jahrzehnt zum Stand der Technik.

Die verwendeten Metallegierungen (Gebrauchseigenschaften) und die Herstellungstechniken solcher Reedschalter haben im letzten Jahrzehnt zu einer Reihe unterschiedlicher Forderungen an die Glaseigenschaften geführt, aus denen sich eine Gruppe z.T. sehr unterschiedlicher Reedgläser entwickelt hat.

Zum diesen Forderungen gehörte erstrangig die Vermeidung von Bleioxid, das bei normalen Verarbeitungstemperaturen von etwa 1000 °C bevorzugt verdampft und durch Kondensation auf Fenstern und Spiegeln die wirksame Strahlendurchlässigkeit rasch verändert. Weiterhin gehörte zu diesen Forderungen die Minimierung leicht verdampfbarer Bestandteile, wie $K_2O$, $B_2O_3$ und $F_2$, die zu störenden Kondensaten im Schalterraum führen können.

Ein neuer Lösungsweg bezüglich obengenannter Forderungen wurde mit der Entwicklung extrem niedrig erweichender Gläser beschritten (DE-PS 2 503 793), indem hier die Verdampfung von Glaskomponenten, wie $K_2O$, PbO, $B_2O_3$ und $F_2$ durch entsprechend tiefe Verarbeitungstemperaturen hinreichend unterdrückt werden konnte. Weiterhin wurde mit diesen niedrig erweichenden Gläsern die Möglichkeit eröffnet, Magnetlegierungen (halbharte Legierungen) in Reedschaltern zu verwenden, deren magnetische Eigenschaften empfindlich von der Wärmevorgeschichte abhängen, so dass sie sich bei den erforderlichen Einschmelztemperaturen normaler Reedgläser unzulässig verändern.

Neben diesen Fortentwicklungen und Verbesserungen von Reedgläsern ist für das Problem der Rissempfindlichkeit dieser Gläser bisher noch keine Lösung angegeben worden. Solche Risse können im Bereich der Drahteinschmelzung sowohl durch überhöhte Spannungen während der Abkühlung, beim Verzinnen der Drähte sowie bei Temperaturwechselbelastungen des Schalters während seines Gebrauchs entstehen und stellen häufig einen bedeutsamen Ausfallfaktor bei der Fertigung von Reedschaltern dar. Die für die Entstehung solcher Risse ursächlichen Zugspannungen resultieren aus der Kontraktionsdifferenz von Metall und Glas. Für die bei Reedschaltern üblichen Metalllegierungen zeigen diese Spannungen in Abhängigkeit von der Temperatur einen Verlauf, wie er in Fig. 1 dargestellt ist.

Ist die Spannung bei RT (Raumtemperatur) mit Rücksicht auf gewünschte und notwendige Radialkräfte sowie zulässige Glasspannungen durch Auswahl der Glas-Metall-Partner festgelegt, so ist bei gegebener Verschmelzgeometrie und festliegender Abkühlgeschwindigkeit der Verlauf der Spannung in Abhängigkeit von der Temperatur ebenfalls vorgegeben.

Für die Rissempfindlichkeit der Drahteinschmelzungen bei Abkühlung und Gebrauch sind die Höhe der maximalen Zugspannung sowie die im Bereich der späteren Betriebstemperatur auftretenden Werte der tangentialen Zugspannung massgeblich. Mit Rücksicht auf die erwünschte oder notwendige radiale Druckspannung im Betriebsbereich liegen dort entsprechende axiale und tangentiale Zugspannungen im Glas vor.

Übersteht die Drahteinschmelzung das kurzzeitige Durchlaufen von $\sigma_{Z,max}$ bei z.B. rascher Abkühlung an freier Luft, so können trotzdem infolge der hohen Zeitabhängigkeit der Glasfestigkeit bei längerem oder wiederholtem Verweilen bei einer Temperatur < ($\sigma_{max}$) Risse im Glas eintreten. Neben den Temperaturen des normalen Gebrauchs von Reedschaltern treten solche erhöhten und gefährlichen Temperaturbelastungen z.B. in Reinigungsbädern und beim Verzinnen der Drähte auf.

Sollen sich Drahteinschmelzungen bei derartigen Temperaturbelastungen rissunempfindlich verhalten, so ist ein geringer Wert für $\sigma_{Z,max}$ bzw. eine geringe Steigung der Polarimeterkurve zwischen RT und T ($\sigma_{Z,max}$) anzustreben (s. Fig. 2).

Voraussetzung hierfür ist, dass das Glas beim Abkühlen möglichst nahe dem quasi-linearen Verlauf der Ausdehnungskurve des Metalls einfriert (kleiner Schnittwinkel zwischen den Kontraktionskurven), so dass die maximale Kontraktionsdifferenz nach dem Einfrieren, die die oben beschriebene Maximalspannung bedingt, so klein wie möglich bleibt (Kurve 2 in Fig. 2).

Die Lage dieser Einfriertemperatur $T_E$ (eine fiktive Grösse, mit der ein praktisch stetig verlaufender Verfestigungsprozess durch Zähigkeitszunahme ersatzweise beschrieben wird), relativ zum Kontraktionsverlauf des Glases im Transformationsbereich, wird durch Relaxtionsmechanismen bedingt, die von der Glaszusammensetzung weitgehend abhängen. Demzufolge hängt $T_E$ auch von der Abkühlgeschwindigkeit ab, womit auch die Kontraktionsdifferenz bei Glas-Metall-Verschmelzungen und der zugehörige Spannungsverlauf in Abhängigkeit von der Temperatur sich als abhängig von der Abkühlgeschwindigkeit erweisen (s. Fig. 3).

Ziel der vorliegenden Erfindung sind Gläser im System $SiO_2$–$Al_2O_3$–$Na_2O$–PbO–$Fe_3O_4$, in denen durch günstigeres Einfrierverhalten in obigem Sinne ungewöhnlich geringe Kontraktionsdifferenzen zwischen diesen Gläsern und den für Reedschalter gebräuchlichen Metallegierungen unterhalb des Transformationsbereiches auftreten, so dass sich mit geeigneten Glas-Metall-Kombinationen Polarimeterkurven mit geringen $\sigma_{Z,max}$-Wer-

ten erreichen lassen, die zudem noch eine aussergewöhnlich geringe Temperaturabhängigkeit zeigen.

Dieses Ziel wird mit Gläsern gemäss den Ansprüchen erreicht.

Die nach dem Verschmelzprozess resultierenden Verschmelzspannungen zwischen metallischem Leiter und den erfindungsgemässen Gläsern, sowohl bei einer schnellen Abkühlung an Luft als auch nach einer 5 °C/min-Kühlung, haben max. Zugspannungswerte entsprechend einem relativen optischen Gangunterschied (Spannungsdoppelbrechung) ≦ 400 nm/cm, bei einer spezifischen Doppelbrechung (Brewstersche Konstante) der Gläser von $(2{,}7 \pm 0{,}1) \times 10^{-6}$ $mm^2$/Newton.

Im Vergleich hierzu führen Gläser nach dem Stande der Technik zu max. Zugspannungswerten > 400 nm/cm.

Der charakteristische Unterschied der erfindungsgemässen Gläser gegenüber dem Stande der Technik (z.B. DE-PS 2 503 783 und FR-PS 1 451 798) liegt darin, dass sie von den Alkalien nur $Na_2O$ von 6,2–16,0 Gew.-% enthalten bei einem gleichzeitigen Gehalt von 33–46 Gew.-% PbO, 43–46,2 Gew.-% $SiO_2$, 1–2 Gew.-% $Al_2O_3$, 2,0–4,5 Gew.-% $Fe_3O_4$ und max. 0.2 Gew.-% $Sb_2O_3$. Hierdurch weisen die erfindungsgemässen Gläser so niedrige Verarbeitungstemperaturen auf, dass die zur Erreichung geringer $\sigma_{Z,max}$-Werte notwendigen Gehalte an PbO und $Na_2O$ keine störende Verdampfung bei der Heissverarbeitung erfahren, so dass diese Gläser, relativ zu handelsüblichen Typen, sogar als verdampfungsarm gelten können.

Dank ihrer streng ausgewählten Zusammensetzung weisen die beanspruchten Gläser Eigenschaften auf, die denen ähnlich zusammengesetzter oder anderer, für den gleichen Anwendungszweck bestimmter Gläser überlegen sind; insbesondere sind folgende Eigenschaften bemerkenswert:

1.1 die Erweichungstemperaturen (EW) dieser Gläser liegen zwischen 537 und 601 °C;

1.2 die Verarbeitungstemperaturen ($V_A$) liegen zwischen 763 und 879 °C;

1.3 die Gläser neigen beim Verschmelzprozess weniger zur Verdampfung als solche Gläser, deren Erweichungstemperaturen (EW) über 601 °C und deren Verarbeitungstemperaturen ($V_A$) über 879 °C liegen;

1.4 die nach dem Verschmelzprozess resultierenden Verschmelzspannungen zwischen metallischem Leiter und Glas sowohl bei einer schnellen Abkühlung an Luft als auch nach einer 5 °C/min-Kühlung weisen eine maximale Zugspannung bei einer spezifischen Doppelbrechung (Brewstersche Konstante) von $(2{,}7 \pm 0{,}1) \times 10^{-6}$ $mm^2/N$, entsprechend einem relativen optischen Gangunterschied (Spannungsdoppelbrechung) ≦ 400 nm/cm auf.

Im Gegensatz hierzu zeigen bisher bekannte eisendotierte Bleigläser mit Gehalten von 28 bis 30 Gew.-% PbO bei den erforderlichen Verarbeitungstemperaturen im Bereich 900 bis 1000 °C bekanntlich so hohe Bleiverdampfungen, dass umfangreiche technische Massnahmen, wie kurzfristige Reinigung oder Wechsel der Spiegel, bei der automatischen Heissverformung getroffen werden müssen. Demgegenüber stellen die erfindungsgemässen hochbleihaltigen Gläser eine wesentliche Verbesserung dar, indem solche technische Massnahmen bzw. Fertigungsunterbrechungen infolge ihrer weitaus geringeren Verdampfung bei den erforderlichen Verarbeitungstemperaturen weitgehend unterbleiben können.

In der nachstehenden Tabelle sind 6 beispielhafte Zusammensetzungen mit ihren Eigenschaften zusammengefasst:

Zusammensetzungsbeispiele Nr. 1–6 in Gew.%:

| Bestandteile, Eigenschaften | Nr. 1 | Nr. 2 | Nr. 3 | Nr. 4 | Nr. 5 | Nr. 6 |
|---|---|---|---|---|---|---|
| $SiO_2$ | 43,0 | 43,0 | 46,0 | 46,2 | 46,2 | 46,2 |
| $Al_2O_3$ | 1,5 | 1,8 | 2,0 | 1,0 | 1,0 | 1,0 |
| $Na_2O$ | 6,2 | 7,5 | 9,0 | 11,5 | 14,0 | 16,0 |
| PbO | 46,1 | 45,7 | 39,7 | 37,5 | 35,0 | 33,0 |
| $Fe_3O_4$ | 3,2 | 2,0 | 3,3 | 3,8 | 3,8 | 3,8 |
| $Sb_2O_3$ | 0,2 | 0,2 | 0,2 | 0,2 | 0,2 | 0,2 |
| Prozent Summe | 100,2 | 100,2 | 100,2 | 100,2 | 100,2 | 100,2 |

| | | | | | | |
|---|---|---|---|---|---|---|
| $\alpha \times 10^6$ (20–300 °C)/ °C | 8,4 | 9,24 | 9,31 | 10,4 | 11,4 | 12,2 |
| Tg ( °C); $\eta \sim 10^{13,5}$ Poise | 432 | 426 | 434 | 418 | 411 | 410 |
| Ew ( °C); $\eta = 10^{7,6}$ Poise | 601 | 584 | 591 | 571 | 555 | 537 |
| $V_A$ ( °C); $\eta = 10^4$ Poise | 879 | 843 | 856 | 817 | 800 | 763 |
| Dichte (g/ccm) | 3,67 | 3,73 | 3,42 | 3,39 | 3,38 | 3,33 |
| $T_{K100}$ ( °C) | 315 | 315 | 248 | 230 | 203 | 184 |
| $\tau$ für 0,5 mm Dicke bei 1100 nm (%) | 39 | 33 | 15 | 27 | 20 | 26 |

Die Verschmelzspannungen der Gläser Nr. 3 und Nr. 5 in Verbindung mit verschiedenen Metallegierungen sind in Fig. 4, 5 und 6 angegeben.

Dargestellt sind jeweils die aus eine Glasdicke von 1 cm bezogenen optischen Gangunterschiede, die den Axialspannungen im Glas in einer Doppeldrahteinschmelzung entsprechen. Die für jede Verschmelzkombination gezeigten Kurven entsprechen einer Kühlung der Verschmelzprobe mit 5°/min sowie einer freien Abkühlung der Probe in Raumluft (Schnellkühlung). Im einzelnen wurden folgende Gläser und Metallegierungen verschmolzen:

Fig. 4: Glas Nr. 3 mit einer Magnetlegierung, bestehend aus 48,5% Eisen, 48,5 Kobalt, 3% Vanadium; Drahtdicke und Abstand: 0,6 mm.

Fig. 5: Glas Nr. 3 mit einer Legierung, bestehend aus 52% Nickel, 48% Eisen;
Drahtdicke und Abstand: 1,0 mm.

Fig. 6: Glas Nr. 5 mit einer Magnetlegierung, bestehend aus 12% Eisen, 3% Niob, max. 0,3% Tantal, ca. 85% Kobalt;
Drahtdicke und Abstand: 0,6 mm.

**Patentanspruch**

1. Niedrig erweichende wärmeabsorbierende Verschmelzgläser im System

$$SiO_2\text{–}Al_2O_3\text{–}NA_2O\text{–}PbO\text{–}Fe_3O_4$$

zur hermetischen Kapselung elektrotechnischer Bauteile, insbesondere sowohl magnetisch als auch nicht magnetisch betätigter Leiterkontakte, mit Wärmedehnungskoeffizienten im Temperaturbereich von 20–300 °C von $8{,}4\text{–}12{,}2 \times 10^{-6}$/ °C und mit maximaler Wärmeabsorption zwischen 1 und 1,5 µm, dadurch gekennzeichnet, dass die Gläser im Ansatz, berechnet als Oxid-Gew.-%, folgende Zusammensetzungen aufweisen:

$SiO_2$ 43,0–46,2 Gew.-%
$Al_2O_3$ 1,0– 2,0 Gew.-%
$Na_2O$ 6,2–16,0 Gew.-%
PbO 33,0–46,1 Gew.-%
$Fe_3O_4$ 2,0– 4,5 Gew.-%
$Sb_2O_3$ max. 0,2 Gew.-%.

**Revendication**

Verre (pour soudage à des métaux) capable d'absorber la chaleur, à bas point de ramollissement, du système:

$$SiO_2\text{–}Al_2O_3\text{–}Na_2O\text{–}PbO\text{–}Fe_3O_4$$

pour l'encapsulage hermétique de composants ou pièces d'électrotechnique, en particulier des contacts conducteurs actionnés aussi bien magnétiquement que non mangétiquement, présentant les coefficients de dilatation thermique dans la zone de températures de 20 à 300 °C de 8,4 à $12{,}2 \times 10^{-6}$/ °C et une absorption maximale de chaleur entre 1 et 1,5 µm, verres caractérisés en ce qu'ils présentent dans la charge les compositions suivantes, calculées en pourcentage en poids des oxydes:

$SiO_2$ 43,0 à 46,2% en poids
$Al_2O_3$ 1,0 à 2,0% en poids
$Na_2O$ 6,2 à 16,0% en poids
PbO 33,0 à 46,1% en poids
$Fe_3O_4$ 2,0 à 4,5% en poids
$Sb_2O_3$ max. 0,2% en poids.

**Claim**

Low-softening, heat-absorbing glasses in the system

$$SiO_2\text{–}Al_2O_3\text{–}Na_2O\text{–}PbO\text{–}Fe_3O_4$$

for the hermetic encapsulation of electrotechnical components, in particular both magnetically and non-magnetically actuable conductor contacts, with heat expansion coefficients of $8.4\text{–}12.2 \times 10^{-6}$/ °C in the temperature range of between 20 and 300 °C and with a maximum heat absorption of between 1 and 1.5 µm, characterized in that the glasses in the attachment, calculated as oxide % by weight, have the following compositions:

$SiO_2$ 43.0–46.2% by weight
$Al_2O_3$ 1.0– 2.0% by weight
$Na_2O$ 6.2–16.0% by weight
PbO 33.0–46.1% by weight
$Fe_3O_4$ 2.0– 4.5% by weight
$Sb_2O_3$ max. 0.2% by weight.

1/6

Fig. 1

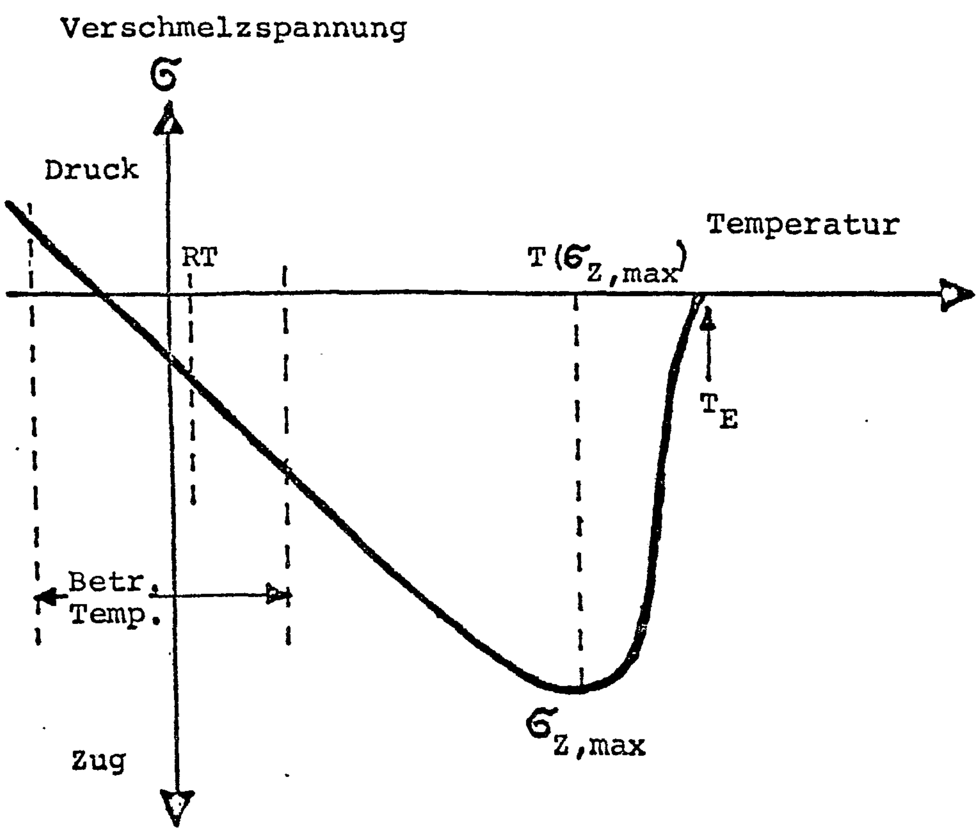


Fig.1: Prinzipieller Verlauf axialer und tangentialer Spannungen im Glas bei einer Metalldraht-einschmelzung in Abhängigkeit von der Temperatur

Fig. 2



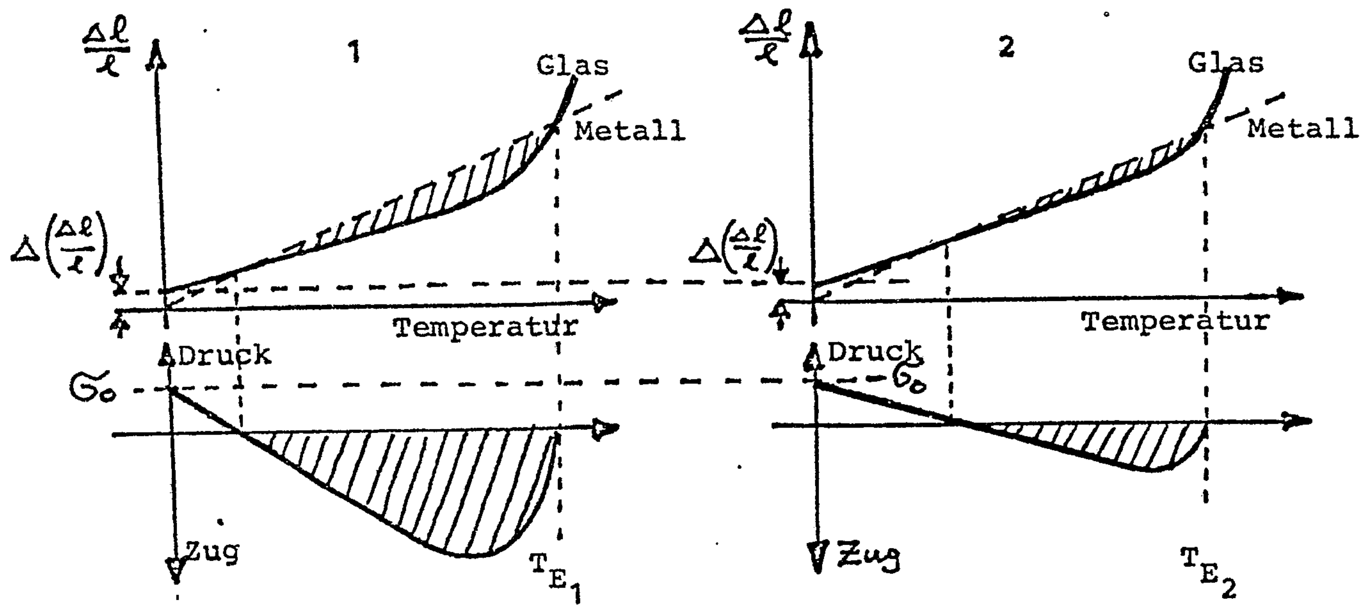


Fig.2: Erzielbare Polarimeterkurven bei hoch- (1) und tiefliegender (2) Einfriertemperatur $T_E$ bei Vorgabe gleicher Endspannung $\sigma_0$ und linearem Verlauf der Metallausdehnung.

Fig. 3

3/6

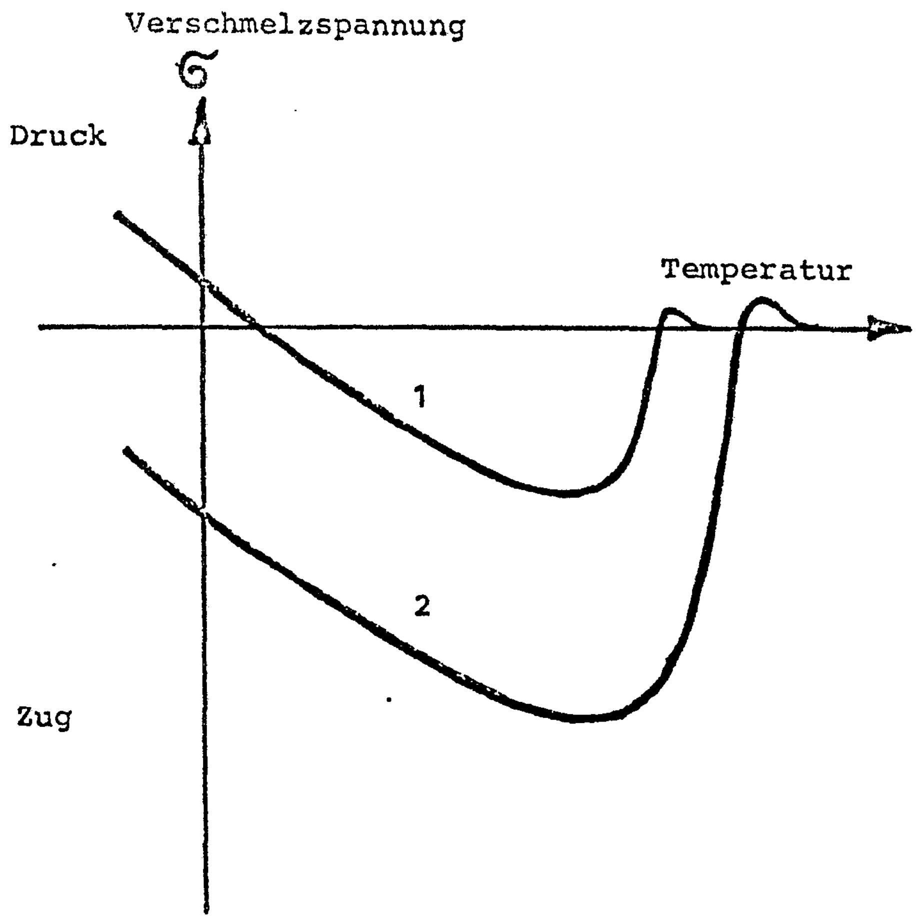


Fig.3: Prinzipielle Verschiebung der Polarimeterkurven be langsamer (1) und schneller (2) Kühlung bei etwa linearer Wärmeausdehnung der Metallkomponente.

Fig. 4

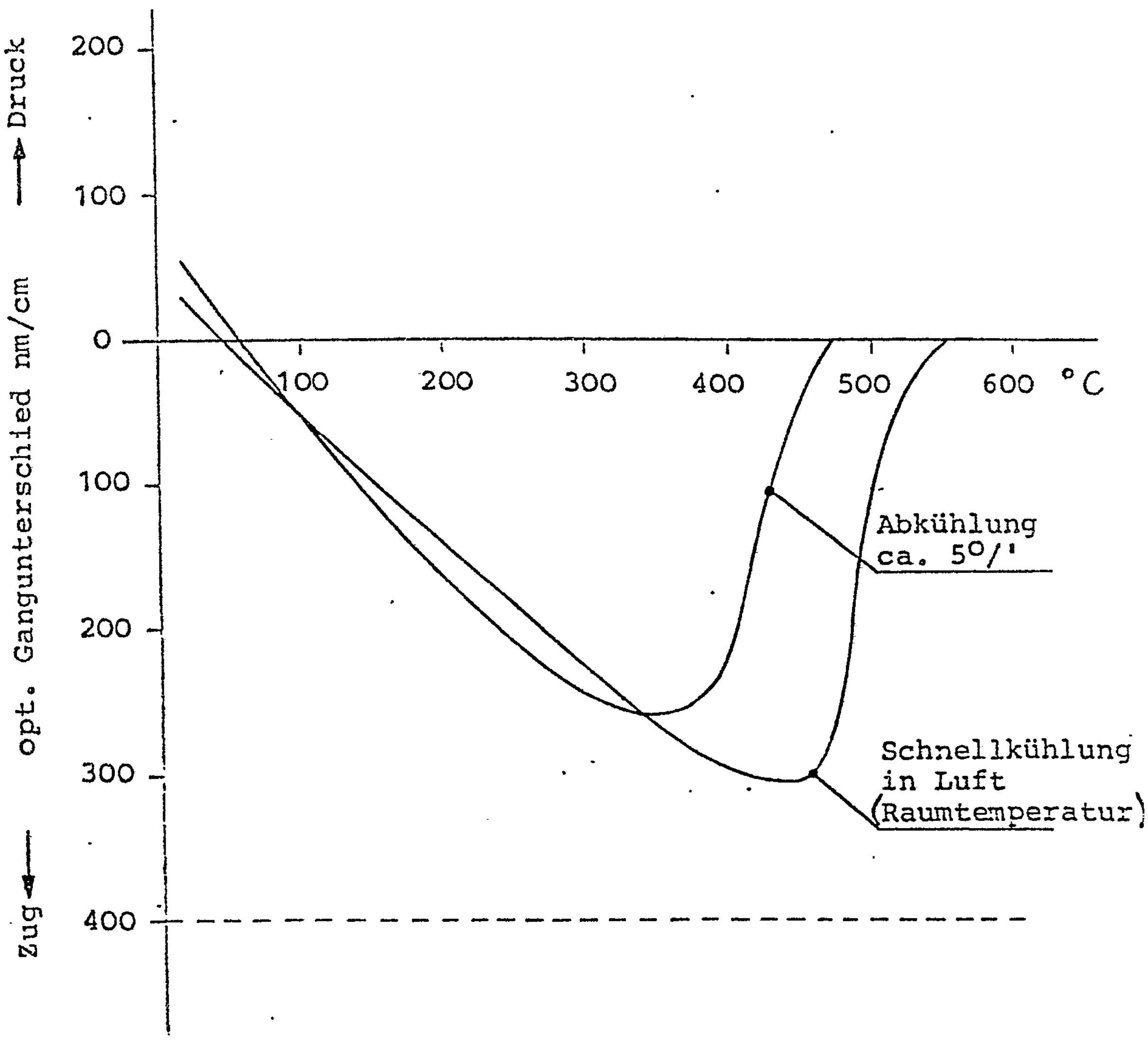
200
100
0
100
200
300
400
100
200
300
400
500
600
°C
→ Druck
opt. Gangunterschied nm/cm
Zug ←
Abkühlung
ca. 5°/'
Schnellkühlung
in Luft
(Raumtemperatur)

5/6

Fig. 5

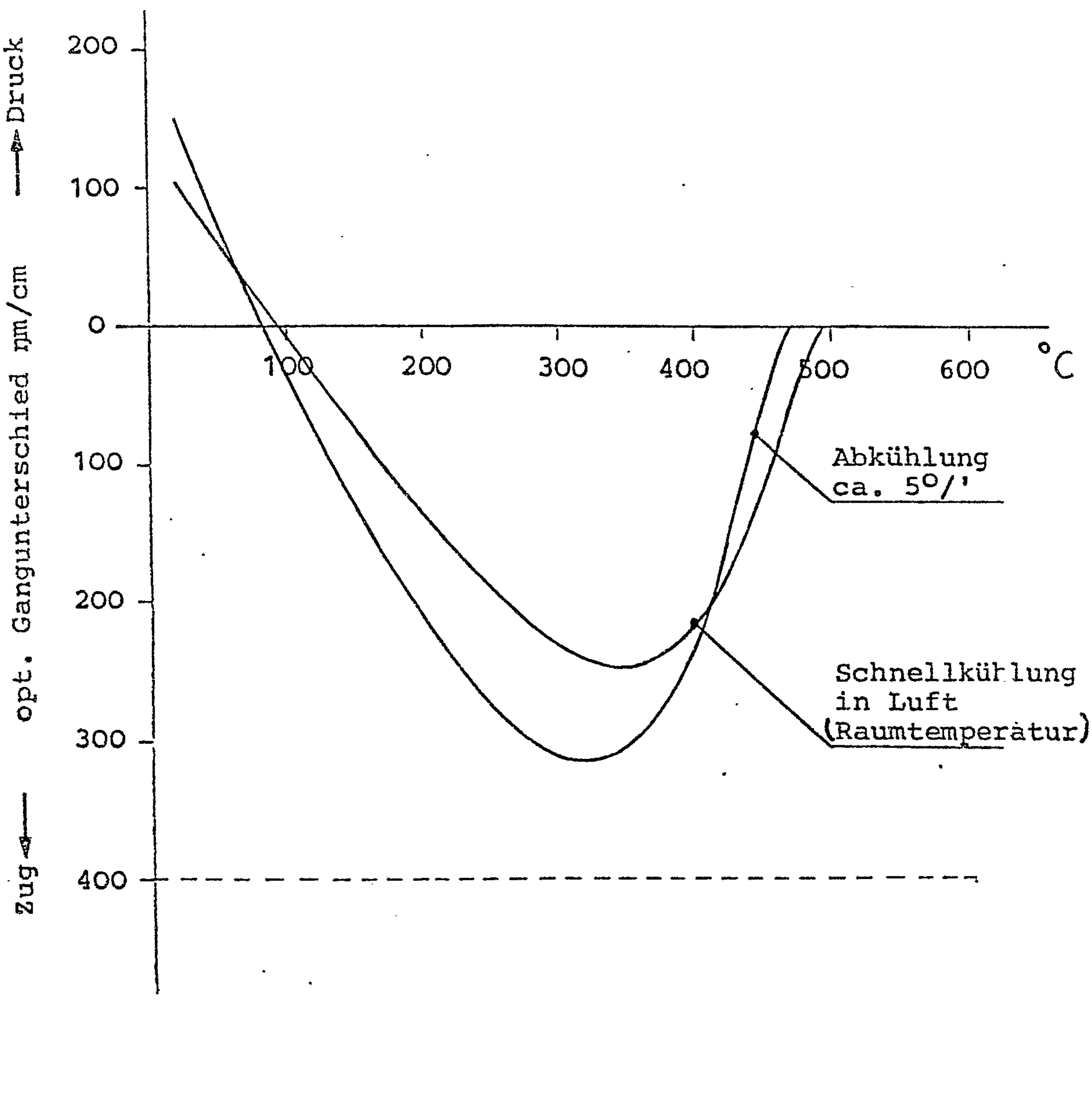
200
100
0
100
200
300
400
opt. Gangunterschied nm/cm
Druck
zug
100
200
300
400
500
600
°C
Abkühlung
ca. 5°/'
Schnellkühlung
in Luft
(Raumtemperatur)

6/6

Fig. 6

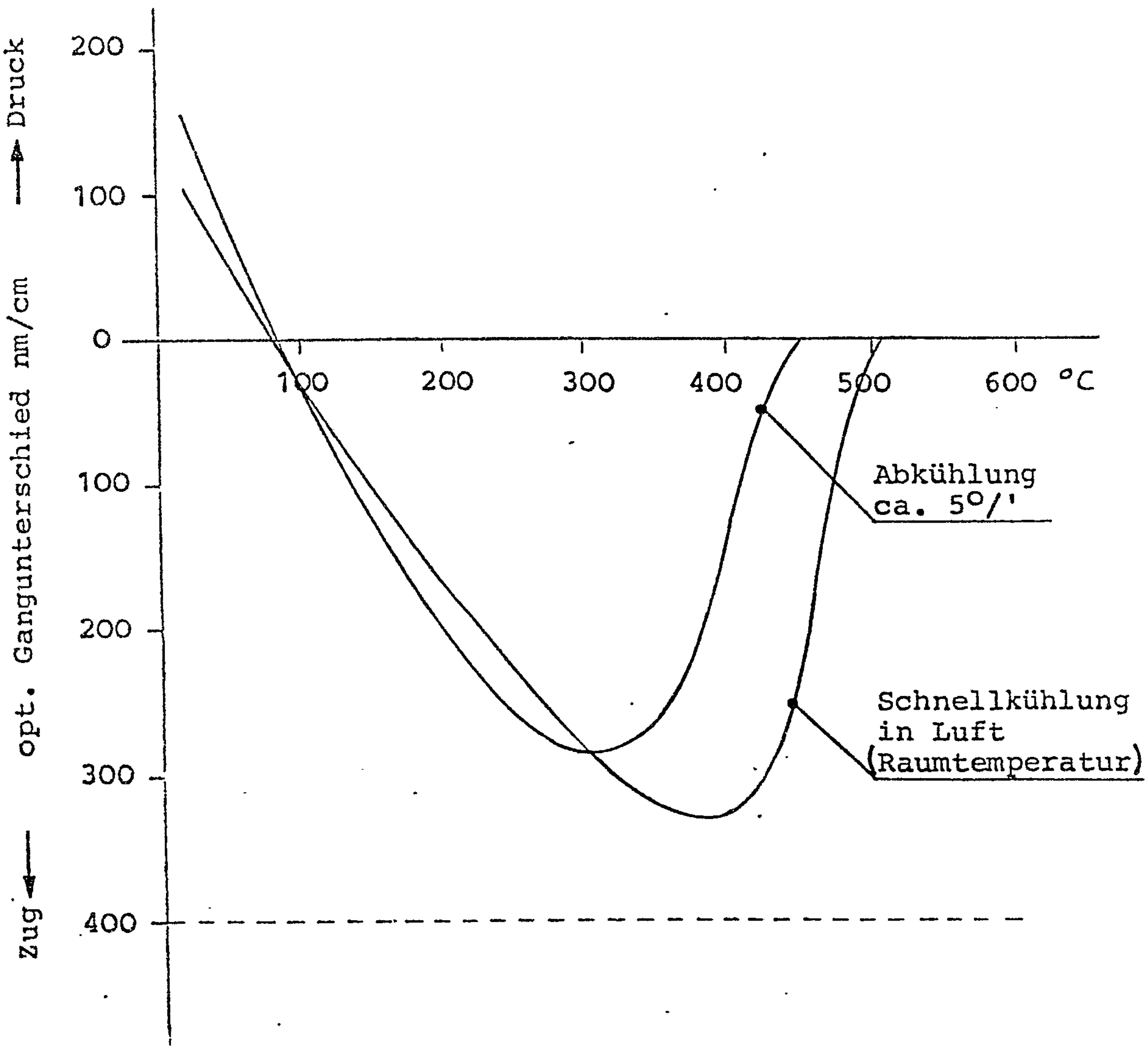
opt. Gangunterschied nm/cm
Druck
Zug
200
100
0
100
200
300
400
100
200
300
400
500
600 °C
Abkühlung
ca. 5°/'
Schnellkühlung
in Luft
(Raumtemperatur)